# EUROPÄISCHE PATENTSCHRIFT

(11) **EP 0 455 227 B1**
(45) Veröffentlichungstag und Bekanntmachung des Hinweises auf die Patenterteilung: **15.09.1993**
(21) Anmeldenummer: 91107028.2
(22) Anmeldetag: 30.04.1991
(51) Int. Cl.: B65G 65/42

(54) **Vorrichtung zum Austragen von Schüttgut**
Device for extracting bulk material
Dispositif d'extraction de matières en vrac

(30) Priorität: 02.05.1990 DE 4014105
(43) Veröffentlichungstag der Anmeldung: 06.11.1991
(73) Patentinhaber: GEBR. SCHMIDT, D-92339 Beilngries (DE)
(72) Erfinder: Schmidt, Willibald, W-8432 Beilngries (DE)
(74) Vertreter: Fincke, Karl Theodor, Dipl.-Phys. Dr.

(56) Entgegenhaltungen:
- DE-A- 3 032 880
- DE-B- 1 278 944

## Beschreibung

Die Erfindung betrifft eine Vorrichtung zum Austragen von Schüttgut aus einem Silo nach dem Oberbegriff des Anspruchs 1.

Bei einer aus der EP-A-60 782 bekannten Vorrichtung dieser Art ist der Förderer nicht anhebbar oder absenkbar. Bei der Benutzung einer solchen Vorrichtung wird der Förderer jedoch im Silo mit Schüttgut zugeschüttet, und daher hat seine Schwenkachse und sein Fahrwerk eine hohe Last zu tragen, was zu einem erheblichen konstruktiven Aufwand führt. Auch muß der Boden des Silos, der von dem bekannten Förderer überstrichen wird, sehr eben sein.

Aufgabe der Erfindung ist es, eine Vorrichtung nach dem Oberbegriff des Anspruchs 1 anzugeben, die eine vereinfachte Konstruktion des Förderers gestattet und keinen völlig ebenen Boden des Silos erfordert.

Die Lösung dieser Aufgabe ist im Kennzeichen des Anspruchs 1 angegeben.

Zum Anheben und Absenken des Förderers haben sich besonders die in Anspruch 2 angegebenen Mittel bewährt.

Um die Höhenlage des Förderers den jeweils vorliegenden Verhältnissen anpassen zu können, ist eine Ausbildung gemäß Anspruch 3 bevorzugt.

Eine geschützte und einfache Zuführung von Energieversorgungsleitungen zu dem Förderer und seinen Einrichtungen ist durch Anspruch 4 gegeben. Elektrische Energieversorgungsleitungen sind im Bereich der vertikalen Achse über Schleifringkontakte zu führen.

Um beim Verfahren des Förderers ein Zurückweichen des Förderers zu verhindern, ist bevorzugt eine Ausbildung nach Anspruch 5, insbesondere Anspruch 6, vorgesehen.

Eine mit besonders geringem Aufwand herstellbare, einfache Konstruktion des Förderers, die keiner Zwischenabstützung etwa durch ein Zwischenrad bedarf, ist in Anspruch 7 angegeben.

Die Erfindung wird im folgenden an einem Ausführungsbeispiel unter Hinweis auf die beigefügten Zeichnungen erläutert.

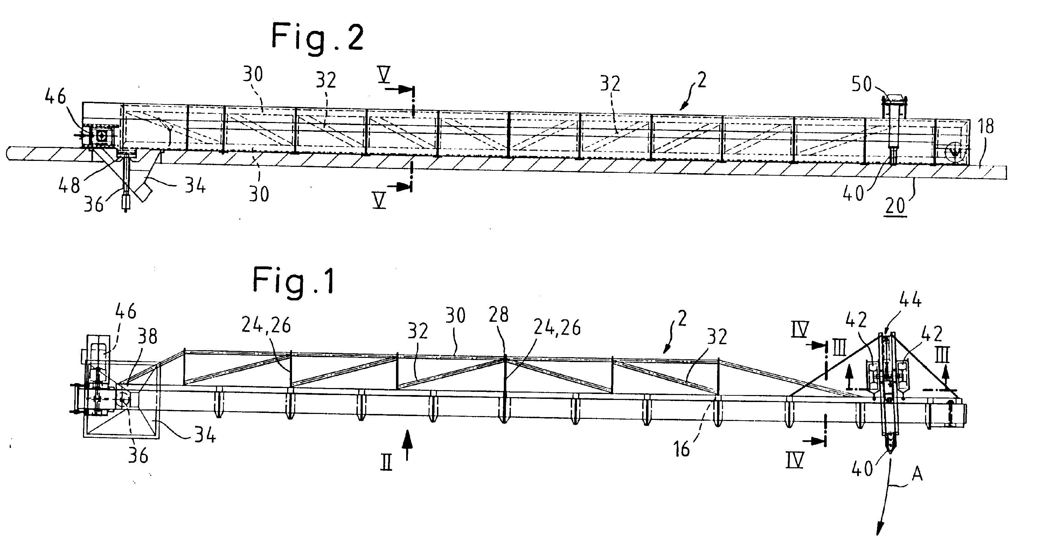

Fig. 1 zeigt eine Aufsicht auf die Vorrichtung mit dem Förderer teilweise im Schnitt.

Fig. 2 zeigt eine Ansicht der Vorrichtung mit dem Förderer aus der Blickrichtung II in Fig. 1.

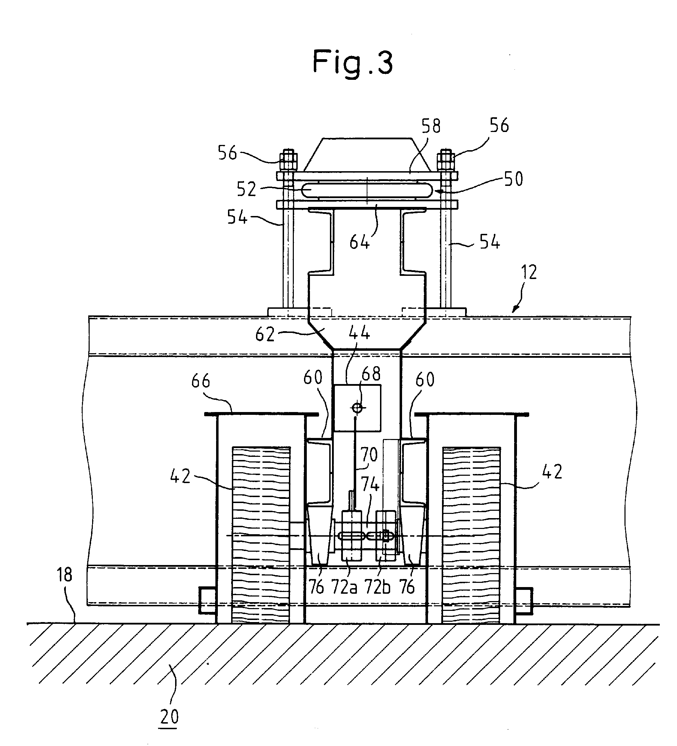

Fig. 3 zeigt einen Schnitt längs der Linie III-III in Fig. 1.

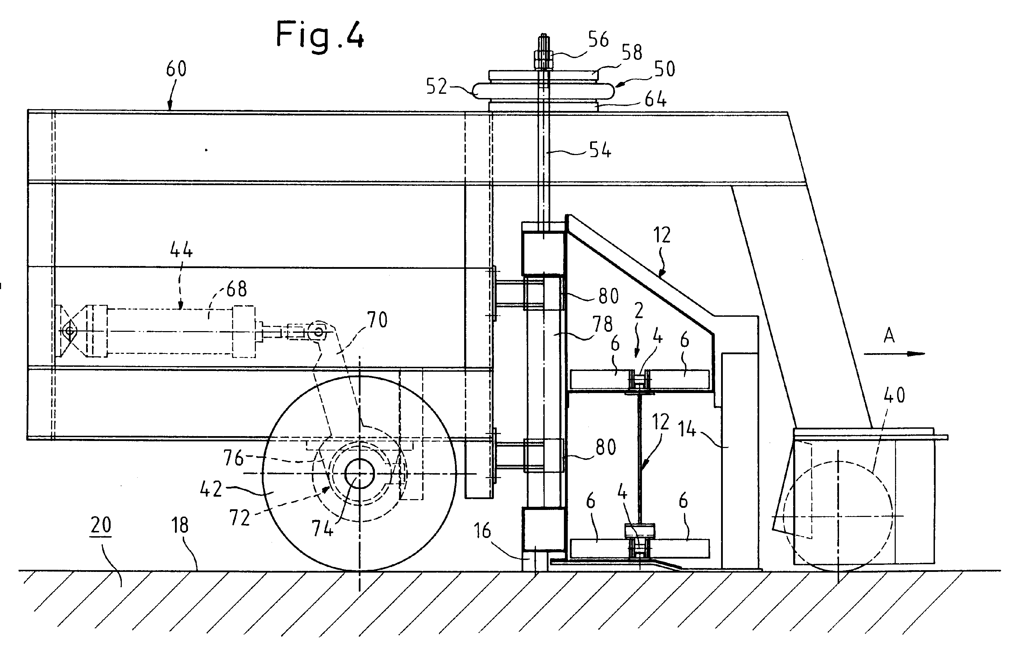

Fig. 4 zeigt einen Schnitt längs der Linie IV-IV in Fig. 1.

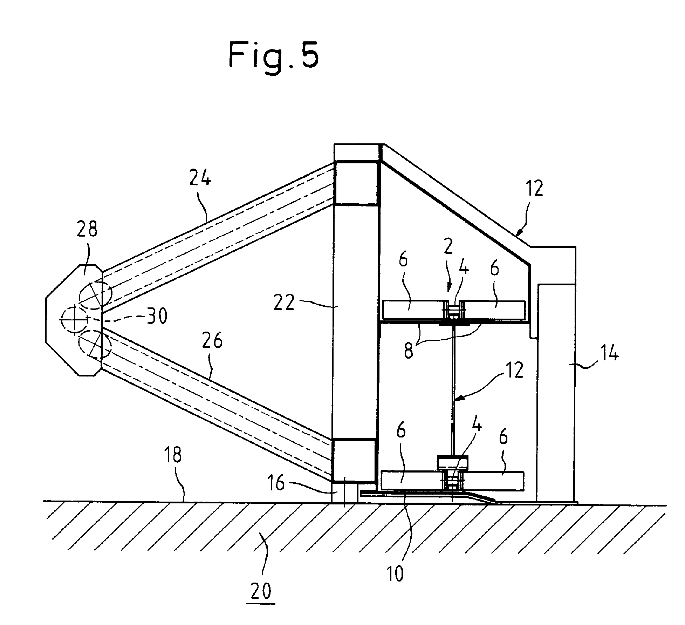

Fig. 5 zeigt einen Schnitt längs der Linie V-V in Fig. 2.

In dem vorliegenden Ausführungsbeispiel ist der Förderer 2 im wesentlichen durch eine endlose Kette 4 gebildet, von der aus nach beiden Seiten Förderstäbe 6 vorstehen. Das obere Trumm des Förderers 2 ist durch einen in Längsrichtung des Förderers 2 verlaufenden Zwischenboden 8 abgestützt. Das untere Trumm des Förderers 2 ist von einer Auflauframpe 10 für das Schüttgut abgestützt. Der Zwischenboden 8 und die Auflauframpe 10 befinden sich an einem Gestell 12, das vor und hinter der Rampe Stützfüße 14 und 16 aufweist, die die Rampe nach unten etwas zur Abstützung auf dem Boden 18 eines Silos 20 überragen. An der Rückseite des Gestells 12 befindet sich ein Tragrahmen 22, an dem oben und unten nach hinten aufeinander zu strebende Abspannstreben 24 und 26 angesetzt sind. Die übereinander liegenden Streben 24, 26 sind durch je ein Verbindungsstück 28 miteinander verbunden. Zwischen den Streben 24, 26 und den Verbindungsstücken 28 verlaufen in Längsrichtung des Förderers 2 oder schräg zur Längsrichtung des Förderers 2 Abspannungen 30, 32. Im Bereich eines trichterförmigen Schüttgutauslaufs 34 im Boden 18 des Silos 20 ist der Förderer 2 um eine ortsfeste vertikale Achse 36 drehbar gelagert und weist dort ein Abgabeende 38 auf. Unter dem anderen Ende des Förderers 2 befindet sich ein Fahrwerk 40, 42 mit einem in Laufrichtung (Pfeil A) vorderen Stützrad 40 und zwei in Laufrichtung hinteren Antriebsrädern 42. Zum Antrieb der Antriebsräder 42 ist ein pneumatischer Motor 44 vorgesehen. Der Antrieb des Förderers 2 erfolgt durch einen Motor 46, der am inneren Ende des Förderers 2 angebracht ist.

Dem Förderer 2 sind Hub-Senk-Vorrichtungen 48, 50 zugeordnet, die dem Anheben des Förderers 2 in seine Fahrstellung und dem Absenken des Förderers 2 auf den Boden 18 des Silos 20 dienen.

Die Hub-Senk-Vorrichtungen 48, 50 sind im vorliegenden Fall durch pneumatisch betätigbare Hubzylinder 48, 50 gebildet. Der eine Hubzylinder 48 stützt den Förderer 2 gegenüber der vertikalen Achse 36 ab; der andere Hubzylinder 50 stützt den Förderer 2 gegenüber dem Fahrwerk 40, 42 ab.

Zur Abstützung des Hubzylinders 50, der im wesentlichen durch einen pneumatischen Balgen 52 gebildet wird, befindet sich auf der Oberseite des Gestells 12 des Förderers 2 ein Abstützgerüst 54 mit einem durch Stellmuttern 56 stufenlos einstellbaren Widerlager 58 für den Balgen 52. Das Fahrwerk 40, 42 weist einen Tragrahmen 60 auf, der einen sich nach oben erstreckenden hohlen Ansatz 62 zur Aufnahme von Gewichten aufweist. Der Ansatz 62 ist oben durch eine Führungsplatte 64 abgedeckt, die als untere Abstützung für den Balgen 52 dient und an dem Abstützgerüst 54 geführt ist. Unten befinden sich an dem Tragrahmen 60 beidseitig Kästen 66 zum Schutz der Antriebsräder 42.

Die vertikale Achse 36 ist hohl. Durch sie sind Energieversorgungsleitungen für den Motor 46 zum Antrieb des Förderers 2, für den Motor 44 zum Verfahren des Förderers 2 und für die Betätigung der Hub-Senk-Vorrichtungen 48, 50 zum Anheben und Absenken des Förderers 2 geführt. Der pneumatische Motor 44 zum Verfahren des Förderers 2 weist einen pneumatischen Zylinder 68 auf, der an dem Tragrahmen 60 des Förderers 2 gelenkig abgestützt ist und einen Hebel 70 einer ersten Ratsche 72a hin- und herzuschwenken gestattet. Eine zweite Ratsche 72b verhindert ein Rücklaufen des Förderers 22. Beim Vorschwenken des Hebels 70 greift die Ratsche eine Welle 74 an, auf der die beiden Antriebsräder 42 sitzen. Diese Welle 74 ist in Lagerstücken 76 an der Unterseite des Tragrahmens 22 gelagert.
Um ein geführtes Anheben und Absenken des Förderers 2 zu ermöglichen, befindet sich an der Rückseite des Tragrahmens 60 des Förderers 2 ein Führungsrohr 78 zur lösbaren Aufnahme von Kupplungsbuchsen 80 am Tragrahmen 60.

## Patentansprüche

1. Vorrichtung zum Austragen von Schüttgut aus einem Silo mittels eines langgestreckten, das Schüttgut über dem Boden des Silos von einer Seite aufnehmenden Förderers (2), der ein im Bereich eines Schüttgutauslaufs (34) um eine ortsfeste vertikale Achse (36) drehbar gelagertes Abgabeende (38) aufweist und um diese Achse (36) herum auf einem Fahrwerk (40, 42) motorisch - insbesondere mittels eines pneumatischen oder hydraulischen Antriebs - verfahrbar ist,
**dadurch gekennzeichnet,**
daß dem Förderer (2) Hub-Senk-Vorrichtungen (48, 50) zum Anheben des Förderers (2) in seine Fahrstellung und zum Absenken des Förderers (2) in eine Ruhestellung auf dem Boden (18) des Silos (20) zugeordnet sind.

2. Vorrichtung nach Anspruch 1, dadurch gekennzeichnet, daß der Förderer (2) gegenüber der vertikalen Achse (36) und dem Fahrwerk (40, 42) durch pneumatisch betätigbare Hubzylinder (48, 50) abgestützt ist.

3. Vorrichtung nach Anspruch 1 oder 2, dadurch gekennzeichnet, daß die Hublänge der Hub- und Senkvorrichtungen (48, 50) stufenlos verstellbar ist.

4. Vorrichtung nach wenigstens einem der vorstehenden Ansprüche, dadurch gekennzeichnet, daß die vertikale Achse (36) hohl ist und daß durch sie Energieversorgungsleitungen für Motore (46, 44, 48, 50) zum Antrieb des Förderers (2), zum Verfahren des Förderers (2) und zum Anheben und Absenken des Förderers (2) geführt sind.

5. Vorrichtung nach wenigstens einem der vorstehenden Ansprüche, dadurch gekennzeichnet, daß das Verfahren des Förderers (2) über eine Einweg-Kupplung (72) erfolgt.

6. Vorrichtung nach Anspruch 5, dadurch gekennzeichnet, daß die Einweg-Kupplung (72) eine ein Rücklaufen des Förderers (2) verhindernde Ratschenkupplung (72) ist.

7. Vorrichtung nach wenigstens einem der vorstehenden Ansprüche, dadurch gekennzeichnet, daß der Förderer (2) nur in den Bereichen der vertikalen Achse (36) und des Fahrwerks (40, 42) abgestützt freitragend ausgebildet ist.

## Claims

1. Apparatus for discharging bulk material from a silo by means of an elongate conveyor (2) which picks up the bulk material over the floor of the silo from one side, which has a delivery end (38) mounted so as to be rotatable about a fixed vertical spindle (36) in the region of a bulk material outlet (34) and is capable of moving about this spindle (36) on a drive mechanism (40, 42), motor-driven, particularly by means of a pneumatic or hydraulic drive, characterised in that associated with the conveyor (2) are raising and lowering means (48, 50) for raising the conveyor (2) into its driving position and for lowering the conveyor (2) into a resting position on the floor (18) of the silo (20).

2. Apparatus according to claim 1, characterised in that the conveyor (2) is supported relative to the vertical spindle (36) and drive mechanism (40, 42) by pneumatically operated lifting cylinders (48, 50).

3. Apparatus according to claim 1 or 2, characterised in that the lifting distance of the raising and lowering means (48, 50) is smoothly variable.

4. Apparatus according to at least one of the preceding claims, characterised in that the vertical spindle (36) is hollow and that through it pass the energy supply lines for motors (46, 44, 48, 50) for driving the conveyor (2), for moving the conveyor (2) and for raising and lowering the conveyor (2).

5. Apparatus according to at least one of the preceding claims, characterised in that the conveyor (2) is moved by means of a one-way coupling (72).

6. Apparatus according to claim 5, characterised in that the one-way coupling (72) is a ratchet coupling (72) which prevents the conveyor (2) from moving backwards.

7. Apparatus according to at least one of the preceding claims, characterised in that the conveyor (2) is constructed so as to be cantilevered only in the regions of the vertical spindle (36) and the drive mechanism (40, 42).

## Revendications

1. Dispositif pour l'extraction de matières en vrac à partir d'un silo au moyen d'un convoyeur (2) allongé, qui reçoit la matière en vrac sur le plancher du silo par un côté et qui comporte dans la zone de l'extraction de matières en vrac (34) une extrémité de décharge (38) montée de façon rotative autour d'un axe vertical monté à demeure (36) et qui peut se déplacer autour de cet axe (36) sur un mécanisme de marche (40,42) entraîné par moteur, en particulier par un entraînement pneumatique ou hydraulique, caractérisé en ce que les dispositifs de levage et de descente (48,50) sont affectés au convoyeur (2) pour le relevage du convoyeur (2) dans sa position de marche et pour la descente du convoyeur (2) dans une position de repos sur le plancher (18) du silo (20).

2. Dispositif selon la revendication 1, caractérisé en ce que le convoyeur (2) est en appui par rapport à l'axe vertical (36) et au mécanisme de marche (40,42) par l'intermédiaire de vérins de levage (48,50) pouvant être actionnés pneumatiquement.

3. Dispositif selon la revendication 1 ou 2, caractérisé en ce que la longueur de levage des dispositifs de levage et de descente (48,50) est réglable en continu.

4. Dispositif selon au moins l'une des revendications précédentes, caractérisé en ce que l'axe vertical (36) est creux et en ce que dans celui-ci sont amenées des conduites d'alimentation énergétiques pour les moteurs (46,44,48,50) pour l'entraînement du convoyeur (2), pour la translation du convoyeur (2) et pour le levage et la descente du convoyeur (2).

5. Dispositif selon au moins l'une des revendications précédentes, caractérisé en ce que la translation du convoyeur (2) s'effectue par un couplage unidirectionnel (72).

6. Dispositif selon la revendication 5, caractérisé en ce que le couplage unidirectionnel (72) est un couplage à cliquet (72) empêchant la marche arrière du convoyeur (2).

7. Dispositif selon au moins l'une des revendications précédentes, caractérisé en ce que le convoyeur (2) est conçu de façon à être soutenu de façon indépendante uniquement dans les zones de l'axe vertical (36) et du mécanisme de marche (40,42).
